# EUROPEAN PATENT SPECIFICATION

(11) **EP 3 149 417 B1**
(45) Date of publication and mention of the grant of the patent: **13.03.2019**
(21) Application number: 15731697.7
(22) Date of filing: 26.05.2015
(51) Int. Cl.: F25D 31/00, A23G 9/22, F25B 39/02, B23P 15/26

(54) **EVAPORATOR FOR A REFRIGERATING MACHINE AND MACHINE COMPRISING SUCH EVAPORATOR**
VERDAMPFER FÜR EINE KÄLTEKREISLAUFMASCHINE SOWIE MASCHINE MIT SOLCH EINEM VERDAMPFER
ÉVAPORATEUR POUR MACHINE À CYCLE DE RÉFRIGÉRATION ET MACHINE COMPRENANT CET ÉVAPORATEUR

(30) Priority: 30.05.2014 IT MI20141012
(43) Date of publication of application: 05.04.2017
(73) Proprietor: Sossai, Aldo, 31010 Mareno di Piave (TV) (IT); Sossai, Christian, 31010 Mareno di Piave (TV) (IT); Sossai, Michele, 31010 Mareno di Piave (TV) (IT)
(72) Inventor: BASSO, Alberto, I-31040 Nervesa della Battaglia (TV) (IT); ZANOLIN, Sergio, I-33070 Polcenigo (PN) (IT)
(74) Representative: Giugni, Diego
(86) International application number: PCT/IB2015/053916
(87) International publication number: WO 2015/181711

(56) References cited:
- EP-A1- 0 519 252
- FR-A- 463 265
- US-A- 4 563 880
- US-A- 5 363 746

## Description

### FIELD OF THE INVENTION

. The present invention relates to an evaporator of a refrigeration cycle machine for cooling a dose of liquid or solid food product, particularly but not necessarily a dose of ice-cream, and to a machine comprising such evaporator.

### TECHNICAL FIELD OF THE INVENTION

. Long since there have been on the market refrigeration cycle machines comprising a cooling evaporator wherein it is poured a food product to process by means of a suitable mechanical beater for making ice-cream.

. Generally for an ice-cream machine there are types of coil evaporators and microchannel evaporators.

. Both types are not without flaws and inconveniences.

. In particular a coil evaporator has a rather low thermal exchange efficiency, whereas a microchannel evaporator, notwithstanding a better thermal exchange efficiency, shows rather high load losses for the coolant fluid.

. The limitations in the refrigeration capability of the evaporator negatively affect the organoleptic properties of the obtainable food product: in fact, it is well known that it is necessary to subject the food product to an extremely high thermal gradient because the more rapidly its temperature is lowered, the better is the quality of the whipping which is carried out by the mechanical beater moved in the container.

. Both types of evaporators have, moreover, a complex realization which considerably weighs on the machine final cost.

. A lot of the known machines used for the production of ice-cream have a performance efficiency greatly dependent on the climatic conditions wherein the machines have to operate, therefore, for example, paradoxically they operate with greater efficiency in the cold season when they are less used and with lower efficiency in the hot season when they are used more.

. Further, a lot of the known machines used for the production of ice-cream, especially some types for professional use, have also other minor inconveniences such as its working may disturb the user because of, for example, the activation of the condenser fan that generates an annoying noise heard by the user and likewise an annoying flow of warm air that may hit the user and also locally change the climatic conditions of the place where the machine is placed.

. The French patent for the invention No. 463.265 describes an evaporator for refrigeration machines made up of a double shell which forms a cavity for the flow of the coolant fluid. In particular the flow path is shaped coil-like by inserting an insulating tape into said cavity or by means of deep-drawing of the inner wall of the shell or, vice versa, by means of deep-drawing of the outer wall of the shell. Such construction, besides being laborious, results in a surface of thermal exchange between the fluid flowing in the cavity and the inner wall of the shell which is not optimal.

. The American patent No. US5,363,746 describes an automatic food preparation device comprising an evaporator provided with two metal segments located within an insulating layer. The first segment is machined or cast having a truncated conical shape with a lateral wall having a groove for the flow of the coolant fluid. The second segment is a metal sleeve welded on the lateral wall.

. The European patent application EP 0519252 describes a method of manufacturing freezing cylinders for ice cream machines comprising the step of forming a helical groove on the outer wall surface of the refrigerant cylinder, a winding flat strip in screw-thread fashion along said groove, and shrink-fitting a heated second cylindrical sleeve on the crests of said strip.

. Each of said documents describes an evaporator or a method of manufacturing an evaporator rather complex and with poor results.

### SUMMARY OF THE INVENTION

.The technical task of the present invention is, therefore, that of realizing an evaporator for a refrigeration cycle machine for cooling a dose of liquid or solid food product and a machine comprising such evaporator that allow to remove all the technical inconveniences of the known art.

. In the field of this technical task an object of the invention is that of realizing an evaporator for a refrigerant cycle machine for cooling a dose of liquid or solid food product which makes it possible a high cooling capacity compared with an extremely simple and strong construction.

. Another object of the invention is that of realizing a refrigeration cycle machine which allows to keep an optimal performance efficiency as the climatic conditions of the place where it is placed to work vary.

. The technical task, as well as these and other objects, according to the present invention are achieved realizing, in general, an evaporator for a refrigeration cycle machine for cooling a dose of liquid or solid food according to claim 1.

. At least one of the components of the refrigeration cycle chosen from the compressor, the condenser and the lamination organ is oversized in a calibrated way so as to allow the machine to work on low speed with maximum performance efficiency as the climatic conditions external to the same machine vary.

. The machine according to the invention can be employed both for domestic and professional use.

. In a preferred embodiment of the invention the second container is joined by its shape to the third container to ensure a uniform surface contact with the third container.

. In a preferred embodiment of the invention the shape and the volumetric capacity of the second container fit that of a glass of the type commonly found on the market.

. In another embodiment of the invention, in case, for constructive and functional necessities, a space between the second and the third container housed therein is formed, such space is filled with one or more heat conducting elements, preferably also of the type comprising a coolant fluid within them.

. In a preferred embodiment of the invention the same evaporator can comprise a plurality of second containers each of which is housed in a corresponding first container. In this case the channels can be joined in series or in parallel or can be part of circuits of the coolant fluid independent one from the other.

. Further, other characteristics of the present invention are defined in the claims hereinafter.

### BRIEF DESCRIPTION OF DRAWINGS

. Further characteristics and advantages of the invention will be more apparent from the description of a preferred embodiment but not excluding of the evaporator and of the refrigeration cycle machine comprising such evaporator according to the invention, shown for exemplification only but not limited to in the appended drawings, wherein:

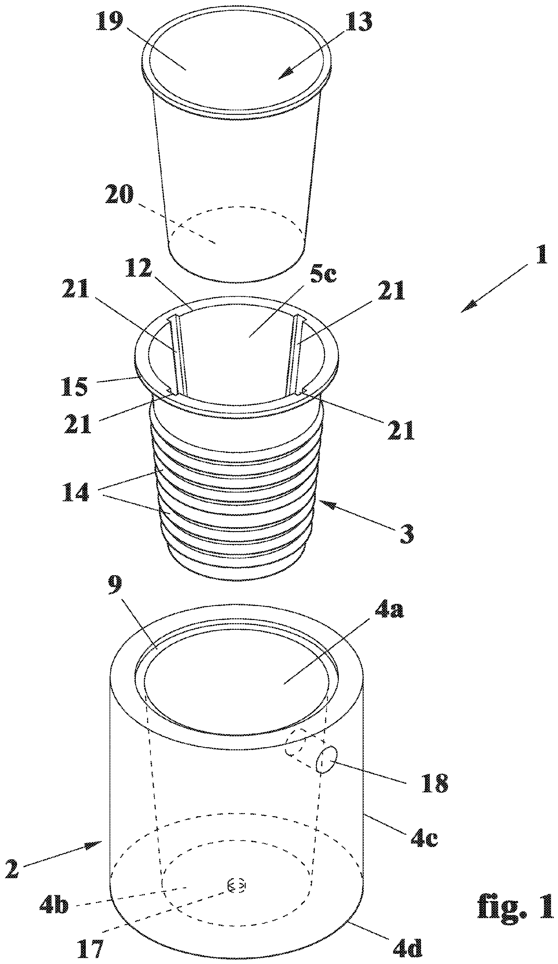

- figure 1 shows an axonometric exploded view of the evaporator;

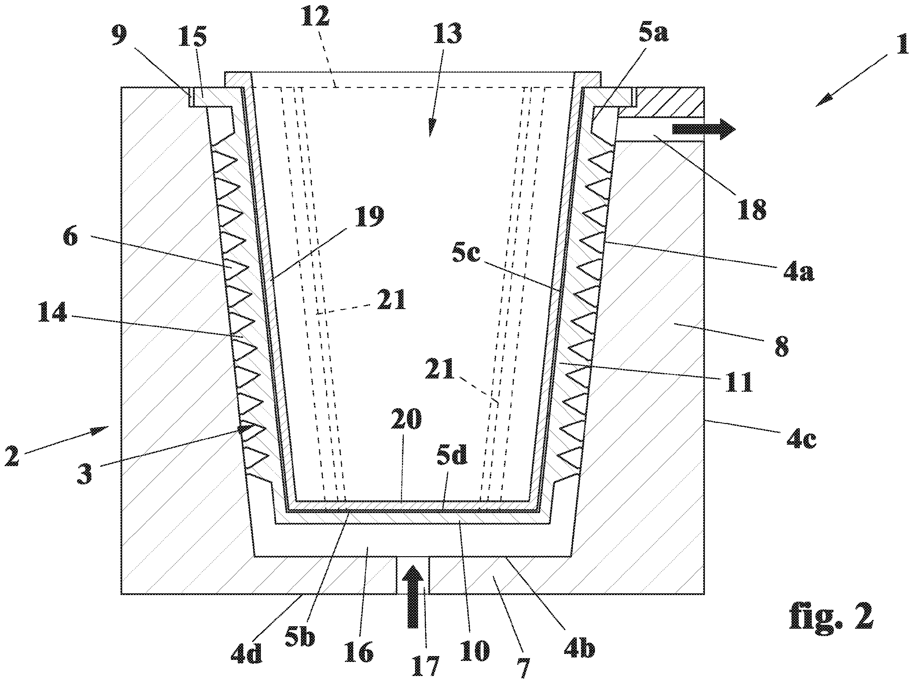

- figure 2 shows the assembled evaporator sectioned along a plane containing its central axis;

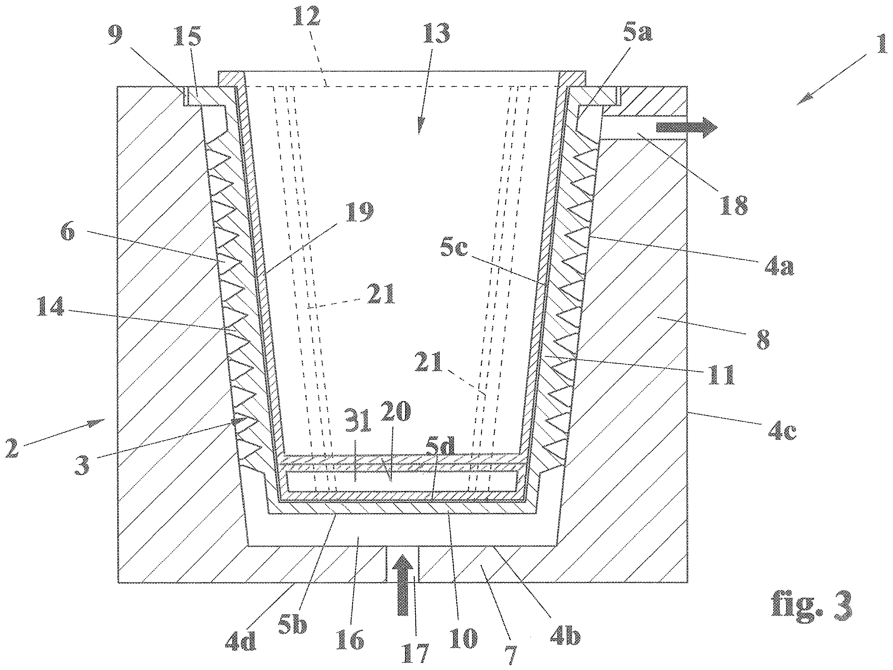

- and figure 3 shows a variation according to the invention wherein a heat conducting element is interposed between the bottom of the third container and the bottom of the second container when they are not into direct contact.

### DETAILED DESCRIPTION OF THE INVENTION

. With reference to the mentioned figures, it is shown an evaporator for a refrigeration cycle machine, generally specified with the reference number 1.

. The refrigeration cycle machine is designated for cooling a dose of liquid or solid food product, and hereinafter, for exemplification only but not limited to, it will be referred to an ice-cream machine.

. As it is known, the components of the refrigeration cycle machine comprise besides the evaporator 1, a compressor, a condenser provided with a cooling fan, and a lamination organ. Such components of the refrigeration cycle of the machine are not shown in the appended drawings.

. The evaporator comprises a first container 2 and a second container 3 housed into the first container 2.

. The second container 3 is configured so as to house within it a third container 13 being removable intended to contain the dose of the food product to process.

. Advantageously the first container 2 and the second container 3 have opposite surfaces 4a, 5a configured and arranged to form in cooperation with one another a channel 6 for the circulation of the coolant fluid used in the refrigeration cycle.

. The first container 2 has inner surfaces 4a, 4b delimiting the inlet opening of the second container 3 and outer surfaces 4c, 4d delimiting the outer shape of the evaporator 1.

. The second container 3 has outer surfaces 5a, 5b opposed to the inner surfaces 4a, 4b of the first container 2 and inner surfaces 5c, 5d delimiting the inlet opening of the third container 13.

. The inner surface 4a of the first container 2 delimits the channel 6 in cooperation with the opposite outer surface 5a of the second container 3.

**.** In particular the first container 2 has a bottom 7 and a lateral wall 8 which delimits with its end opposite to the bottom 7 an access mouth 9 for the second container 3.

. Surface 4a and respectively 4c is therefore the inner surface and respectively the outer one of the lateral wall 8, while surface 4b and respectively 4d is the inner and respectively the outer one of the bottom 7.

. The second container 3, too, has a bottom 10 and a lateral wall 11 which delimits with its end opposite to the bottom 10 an access mouth 12 for the third container 13, such as a glass.

. Surface 5c and respectively 5a is therefore the inner surface and respectively the outer one of the lateral wall 11, whereas surface 5d and respectively 5b is the inner surface and respectively the outer one of the bottom 10.

. The channel 6 extends at least about a portion of the lateral wall 11 of the second container 3 comprising the joining end to its bottom 10.

. In particular the channel 6 raises from the bottom 10 of the second container 3 up to a level not lower than the predictable maximum level for the food product in the third container 13 when the latter is positioned in the second container 3.

. At least in this particular portion the lateral wall 11 of the second container 3 has a uniform thickness.

. Further, preferably, at least this particular portion of the lateral wall 11 of the second container 3 is conical.

. In particular, the second container 3 has its inner lateral wall of a uniform thickness and its bottom 10 of a uniform thickness as well and the same as the thickness of its lateral wall 11.

. The second container 3 is arranged with its bottom 10 facing the bottom 7 of the first container 2 and its lateral wall 11 facing the lateral wall 8 of the first container 2. The outer surface 5a of the lateral wall 11 of the second container 3 is suitably distanced from the opposite inner surface 4a of the lateral wall 8 of the first container 2.

. Preferably, the distance between the outer surface 5a of the lateral wall 11 of the second container 3 and the inner surface 4a of the lateral wall 8 of the first container 2 is constant in the direction from the bottom 7, 10 to the access mouth 9, 12 of the containers 2, 3.

. In particular, the first container has the bottom 7 of a circular flat shape and the lateral wall 8 internally of a conical shape and tapered towards the bottom 7, and the second container 3 has the bottom 10 of a circular flat shape and the lateral wall 11 internally and externally of a conical shape tapered towards the bottom 10 and having the same conicity of the inner surface of the lateral wall 8 of the first container 2.

. More precisely, the second container 3 is positioned with its bottom 10 parallel to the bottom 7 of the first container 2 and with the inner conical surface of its lateral wall 11 coaxial to the inner and outer conical surface of the lateral wall 8 of the first container 2.

. Advantageously, the channel 6 extends along a helical path about the lateral wall 11 of the second container 3.

. Advantageously, the channel 6 is delimited by a threading 14 formed on the lateral wall of one between the first container 2 and the second container 3.

. In this specific case the threading 14 is formed on the outer surface 5a of the lateral wall 11 of the second container 3.

. The crest of the threads of the threading 14 is clamped with a hermetic seal against the inner surface 4a of the lateral wall 8 of the first container 2.

. The threads of the threading 14 have constant pitch and depth, that is the differential between the diameter at the crest and the diameter at the root, is constant as well.

. Of course the depth of the threads of the threading 14 is not lower than the distance between the outer surface 5a of the lateral wall 11 of the second container 3 and the inner surface 4a of the lateral wall 8 of the first container 2 so as to form the needed hermetic seal at the assembly stage when, inserting the second container 3 into the first container 2, the threads of the threading 14 are forced against the inner surface 4a of the lateral wall 8 of the first container 2. In particular, the threads have an interference with respect to said inner surface 4a between 2 tenths of a mm and 6 tenths of a mm, preferably 4 tenths of a mm. In fact, it has been seen, after a great number of experimental tests, that the abovementioned interference interval makes it possible to obtain the best hermetic seal without, conversely, resulting in an excessive pressing of the threads which might cause on the one hand micro cracks in the point of contact with the wall of the first container and on the other hand the decrease of the volume of the same channel or deformations which prevent an orderly and linear flow of the coolant fluid.

. Further, the threading has been devised and made so as to achieve an optimal thermal exchange between the coolant fluid and the second container 3. In fact, surprisingly it has been found that in order to obtain an efficient thermal exchange in a very short time the cross section of the helical channel delimited by two adjacent threads and by the inner surface 4a of the first container has to have an area comprised between 5 mm² and 30 mm², preferably between 10 mm² and 25 mm². Hence, based on such fact, it is possible to decide the thread geometry and the relative pitch, having in mind that the inner surface 4a of the first container 2 does not change.

. In accordance with the invention the threads have a triangular section with a pointed vertex distancing itself from the outer surface 5a of the second container 3. This type of section of the thread has been chosen since it has proved itself to be the best when considering the thermodynamic exchange. In fact, in correspondence with the vertexes of the thread a lower surface of thermal exchange towards the exterior allows the coolant fluid in this area to keep the best cooling capacity, whereas in correspondence with the root of the threads a greater surface of thermal exchange towards the interior, that is towards the container with the food product to be cooled, allows the coolant fluid in this area to absorb more heat from the container to be cooled and consequently, to release more cold.

. Of course, the general shape of the first container 2 and of the second container 3 can be different from the just described one. For example it can be envisaged that both the first container 2 and the second container 3 are internally and externally cylindrical.

. The lateral wall 11 of the second container 3 has an apical flange 15 for fixing with a hermetic seal to the apical edge of the lateral wall 8 of the first container 2.

. Such fixing is carried out preferably by welding.

. Between the bottom 7 of the first container 2 and the bottom 10 of the second container 3 there is a gap 16 in fluid communication with the channel 6.

. The bottom 7 of the first container 2 has a calibrated through hole 17 for the inlet of the coolant fluid into the gap 16.

. The lateral wall 8 of the first container 2 has at the apex a calibrated through hole 18 for the outlet of the coolant fluid from the channel 6.

. The third container 13 can be placed in a removable way into the second container 3 so as to allow the dosing of the ingredients of the food product also in a position remote from the machine.

. The third container 13 has a lateral wall 19 and a bottom 20.

. The second container 3 is joined by its shape to the third container 13.

. When the third container 13 is inserted into the second container 3, the lateral wall 19 of the third container 13 is, in a uniform way, in direct contact with the inner surface 5c of the lateral wall 11 of the second container 3, whereas the bottom 20 of the third container 13 is, in a uniform way, in direct contact with the inner surface 5d of the bottom 10 of the second container 3 or alternatively, whenever it is not possible to ensure a direct contact between the bottom 20 of the third container 13 and the bottom 10 of the second container 3, with a heat conducting element 31, expressly positioned so as to fill the space between the bottom 20 of the third container 13 and the bottom 10 of the second container 3. Should such heat conducting element be present, preferably it would be of the type having a cooling fluid within it. Of course, in other forms of embodiment of the invention one or more heat conducting elements of this type can be placed wherever there are spaces between the second container 3 and the third container 13.

. Finally the inner surface 5c of the lateral wall 11 of the second container 3 may have grooves 21 for venting the air trapped between the third container 13 and the second container 3 during the introduction of the third container 13 into the second container 3. The grooves 21 preferably extend along the axial generatrices of the inner surface 5c of the lateral wall 11 of the second container 3.

. Such grooves, however, can be areas of partial thermal insulation that might hinder the efficiency of the thermal exchange. Therefore, whenever it is desired the highest performance of the evaporator especially regarding the cooling, the grooves can be removed so as to have a completely even inner surface 5a of the second container 3.

. Briefly, the operation of the evaporator is as follows.

. The coolant fluid in the circuit of the refrigeration cycle enters the evaporator 1 through the inlet hole 17 and exits the evaporator 1 through the outlet hole 18 after having travelled, cascade-like within the evaporator 1, the gap 16 and the channel 6.

. Advantageously, at least up to the predictable maximum level for the food product in the third container 13 when this is placed into the second container 3, the outer surfaces 5a, 5b of the second container 3 are completely and directly wetted by the coolant fluid.

. This makes the refrigeration system of the third container 13 extremely efficient: the cooling energy of the coolant fluid is evenly transferred by convection to the second container 3 directly without any interposition from any other means and by conduction such cooling energy received from the second container 3 is evenly transferred to the third container 13 directly without any interposition from any other means.

**.** In addition the channel 6 shaping which winds about the second container 3 expands the interaction time between the coolant fluid and the second container 3 contributing to improve the refrigeration system efficiency.

. In accordance with a particular form of embodiment of the invention, the realization of the machine envisages that at least one of the components of the refrigeration cycle chosen from the compressor, the condenser and the lamination organ is oversized in a calibrated way so as to allow the machine to work on low speed with maximum performance efficiency as the climatic conditions external to the machine vary.

. Basically the machine is designed so as to be a unbalanced thermodynamic system.

. Preferably the condenser, the compressor and the lamination organ are all oversized in a calibrated way.

. The condenser oversizing allows its static operation which does not require the fan activation. A limited activation of the fan results in the noise lowering and in a considerable comfort improvement.

. Hereinafter it is described an example of the sizing of the machine with respect to the required cooling effect.

. Normally a refrigeration compressor is chosen based on the nominal refrigerating capacity of the evaporator with a margin of +10%, therefore for example, for a refrigerating capacity of the evaporator of 100 W it is chosen a capacity of the compressor of 110 W at the temperature and humidity conditions taken into account at the setup: in such case, the compressor will have at the variation of the temperature, so to speak, a 10% store with respect to the required capacity.

. In the case in point the compressor has a refrigerating capacity definitely higher than that required by the evaporator, in particular higher than 50%, therefore in any situation it is capable of supplying an amount of refrigerating gas which can satisfy the requirements for a rapid lowering of the temperature.

. Consequently in the refrigeration cycle two of its components, that is the compressor and the condenser are definitely oversized, in particular at least 50% greater while the capillary tube and/or the lamination valve are sized with an excess error of about +20/25%.

. The resulting advantages consist in a further rapid lowering of the temperature and in the noiselessness.

**.** According to a further object of the present invention, the evaporator 1 is advantageously realized according to a method comprising the steps of:
- providing a first container 2 comprising a bottom 7, a lateral wall 8, an access mouth 9, a through hole 17 for the inlet of a coolant fluid, a through hole 18 for the outlet of said coolant fluid;
- providing a second container 3 comprising a bottom 10 of smaller dimensions with respect to the bottom 7 of the first container 2, a lateral wall 11, an access mouth 12, an apical flange 15 delimiting such access mouth and an outer surface 5a of the lateral wall 11 having a helical threading 14 with dimensions so as to interfere by 2-6 tenths of a mm with the inner surface 4a of the lateral wall 8 of the first container 2;
- heating said first container 2 to a temperature so as to allow a sufficient expansion so as to make it possible to insert the second container;
- inserting the second container 3 into the first container 2 until the flange 15 of the second container 2 abuts against the mouth 9 of the first container 2;
- cooling the first container 2 with the second container 3 inserted therein so as to obtain the crimping or the shrinkage of the first container on the second container with the pressing of the threading 14 of said second container against the inner surface 4a of the lateral wall 8 of said first container, realizing a hermetic seal therein and forming a helical channel having a cross section of an area between 5 mm² and 30 mm².

**.** Preferably, the second container 3 basically has a truncated conical shape whose outer surface 5a is machined so as to obtain a threading 14 as the one previously described.

**.** The heating step is generally carried out at a temperature comprised between 250 and 600 °C, according to the conventional methods of the skilled in the art, keeping in mind the coefficients of expansion of the materials used, as well as the thickness of the walls of the containers. For example, if it is used stainless steel and the first container has a thickness of the lateral wall comprised between 1.5 mm and 3 mm, the heating can be carried out at a temperature comprised between 200 and 350 °C. Generally, the heating is carried out in a pre-heated oven at the desired temperature and the first container 2 is kept therein for about 10-20 minutes.

**.** The cooling step, too, is carried out in a completely conventional way. Preferably, after the insertion, the two containers are left to cool at room temperature until the temperature of the same containers reaches a value of at least 20-30 °C.

**.** Further, preferably, the method of production of the evaporator according to the present invention, comprises a final step for welding the flange 15 of the second container 3 on the mouth 9 of the first container 2.

. Practically, it has been seen that the evaporator according to the invention is particularly advantageous as it yields, by means of an extremely simple construction but with surprisingly relevant detailed solutions, the best efficiency which, what is more, thanks to the special calibrated oversizing of one or more components of the machine remains optimal for any climatic condition external to the machine.

. Basically, surprisingly it has been seen that in order to produce 150 ml of ice-cream with the evaporator of the invention, provided with a second container 3 having a volume of about 150 ml and an outer lateral wall with threading and channel as those described in the foregoing, it is required a variable time between 3 and 5 minutes, depending on the ingredients used. Such time can be reduced to 2 minutes and a half if the solution of oversizing the above said components of the refrigeration cycle is used. This time is considerably lower than that generally needed if it is employed an evaporator of the known art; in fact, in this case the time is not lower than about 15 minutes.

. The evaporator and the machine devised as such are susceptible a great number of modifications and variations, all included in the field of the inventive concept; moreover, all the details can be replaced by technically equivalent elements.

. Basically, the materials used, as well as the dimensions, can be any according to the requirements and to the state of the art. Obviously, provided that it is respected the above said realization of the channel 6 for the flowing of the coolant fluid and of the corresponding threads. In fact, the dimensions of the containers can vary, for example from 100 ml to 1000 ml, that is their volume can be that conventionally employed for the realization of ice-cream machines. Also, the thicknesses of the walls of the first container 2 and of the second container 3 can vary depending on the requirements or preferences.

. The preferred materials are steel and aluminium. Other materials such as special steels or metal alloys can be used for the realization of the evaporator according to the present invention.

## Claims

1. An evaporator (1) for a refrigeration cycle machine for cooling a dose of liquid or solid food product, comprising at least a first container (2), at least a second container (3) housed in a fixed way in the first container (2), said second container (3) being suitable to house inside it at least a third container (13) being removable and intended to contain the dose of product, the first container (2) and the second container (3) having opposite surfaces (4a, 5a) configured and arranged to form in cooperation with one another a channel (6) for the circulation of the coolant fluid used in the refrigeration cycle, the first container (2) having a bottom (7) and a lateral wall (8) which delimits with its opposite end to the bottom (7) an access mouth (9), the second container (3) having a bottom (10) and a lateral wall (11) which delimits with its opposite end to the bottom (10) an access mouth (12), the second container (3) being positioned with its bottom (10) facing the bottom (7) of the first container (2) and with its lateral wall (11) facing the lateral wall (8) of the first container (2), said channel (6) extending along a helical path about said lateral wall (8) of the second container (3), **characterized in that** said channel (6) has a cross-section of an area comprised between 5 mm² and 30 mm², preferably between 10 mm² and 25 mm², said channel (6) is delimited by a threading (14) formed on the lateral wall (8, 11) of one of said first and second container (2, 3), the threads of said threading (14) having a crest clamped with a hermetic seal against the lateral wall (8, 11) of the other of the first and second container (2, 3), said threading (14) consisting in threads generally having a triangular section with a flattened vertex far from the outer surface (5a) of the second container (3).

2. The evaporator (1) for a refrigeration cycle machine according to the preceding claim, **characterised in that** said channel (6) extends at least about a portion of the lateral wall (11) of the second container (3) comprising the joining end to its bottom (10).

3. The evaporator (1) for a refrigeration cycle machine according to the preceding claim, **characterised in that** at least said portion of the lateral wall (11) of the second container (3) has a uniform thickness.

4. The evaporator (1) for a refrigeration cycle machine according to the preceding claim, **characterised in that** at least said portion of the lateral wall (11) of the second container (3) is conical.

5. The evaporator (1) for a refrigeration cycle machine according to any one of claims 1 to 6, **characterised in that** the lateral wall (11) of said second container (3) has an apical flange (15) for the fixing with a hermetic seal to the apical edge of the lateral wall (8) of the first container (2).

6. The evaporator (1) for a refrigeration cycle machine according to any one of claims 3 to 5, **characterized in that** between the bottom (7, 10) of said first and second container (2, 3) there is a gap (16) in fluid communication with said channel (6).

7. The evaporator (1) for a refrigeration cycle machine according to the preceding claim, **characterised in that** the bottom (7) of said first container (2) has a calibrated through hole (17) for the inlet of the coolant fluid into said gap (16).

8. The evaporator (1) for a refrigeration cycle machine according to any one of claims 1 to 7, **characterized in that** the lateral wall (8) of said first container (2) has at the apex a calibrated through hole (18) for the outlet of the coolant fluid from said channel (6).

9. A refrigeration cycle machine for cooling a dose of liquid or solid food product, comprising an evaporator (1) according to any one of the preceding claims.

10. The refrigeration cycle machine according to the preceding claim, **characterised in that** said second container (3) has superficial grooves (21) for venting the air trapped between the third container (13) and the second container (3) during the introduction of said third container (13) into the second container (3).

11. The refrigeration cycle machine according to the preceding claim, **characterised in that** at least one of the components of the refrigeration cycle chosen from the compressor, the condenser and the lamination organ is oversized in a calibrated way so as to allow the machine to work on low speed with maximum performance efficiency as the climatic conditions external to the machine vary.

12. A method for manufacturing an evaporator comprising the steps of:
- providing a first container (2) comprising a bottom (7), a lateral wall (8), an access mouth (9), a through hole (17) for the inlet of a coolant fluid, a through hole (18) for the outlet of said coolant fluid;
- providing a second container (3) comprising a bottom (10) of smaller dimensions with respect to the bottom (7) of the first container (2), a lateral wall (11), an access mouth (12), an apical flange (15) delimiting such access mouth and an outer surface (5a) of the lateral wall (11) having a helical threading with dimensions so as to interfere by 2-6 tenths of a mm with the inner surface (4a) of the lateral wall (8) of the first container (2);
- heating said first container (2) to a temperature to allow a sufficient expansion so as to make it possible to insert the second container;
- inserting the second container (3) into the first container (2) until the flange (15) of the second container (2) abuts against the mouth (9) of the first container (2);
- cooling the first container (2) with the second container (3) inserted therein so as to obtain the crimping or the shrinkage of the first container on the second container with the pressing of the threading (14) of said second container against the inner surface (4a) of the lateral wall (8) of said first container, achieving a hermetic seal therein and forming a helical channel having a cross section of an area between 5 mm² and 30 mm², said channel (6) being delimited by a threading (14) formed on the lateral wall (8, 11) of one of said first and second container (2, 3), the threads of said threading (14) having a crest clamped with a hermetic seal against the lateral wall (8, 11) of the other of the first and second container (2, 3), said threading (14) consisting in threads generally having a triangular section with a flattened vertex far from the outer surface (5a) of the second container (3).

## Patentansprüche

1. Verdampfer (1) für eine Kältekreislaufmaschine zum Kühlen einer Menge eines flüssigen oder festen Lebensmittelprodukts, der wenigstens einen ersten Behälter (2), und wenigstens einen zweiten Behälter (3), der fixiert in dem ersten Behälter (2) aufgenommen ist, umfasst, wobei der zweite Behälter (3) geeignet ist, um darin wenigstens einen dritten Behälter (13) aufzunehmen, der entfernt werden kann und vorgesehen ist, um die Menge des Produkts zu enthalten, wobei der erste Behälter (2) und der zweite Behälter (3) gegenüberliegende Flächen (4a, 5a) aufweisen, die konfiguriert und angeordnet sind, um gemeinsam einen Kanal (6) für das Zirkulieren eines in dem Kältekreislauf verwendeten Kühlfluids zu bilden, wobei der erste Behälter (2) einen Boden (7) und eine laterale Wand (8) aufweist, die mit ihrem dem Boden (7) entgegengesetzten Ende eine Zugriffsöffnung (9) begrenzt, wobei der zweite Behälter (3) einen Boden (10) und eine laterale Wand (11) aufweist, die mit ihrem dem Boden (10) entgegengesetzten Ende eine Zugriffsöffnung (12) begrenzt, wobei der zweite Behälter (3) derart angeordnet ist, dass sein Boden (10) dem Boden (7) des ersten Behälters (2) zugewandt ist und seine laterale Wand (11) der lateralen Wand (8) des ersten Behälters (2) zugewandt ist, wobei sich der Kanal (6) entlang eines spiralförmigen Pfads um die laterale Wand (8) des zweiten Behälters (3) erstreckt, **dadurch gekennzeichnet, dass** der Kanal (6) eine Querschnittfläche zwischen 5 mm² und 30 mm² und vorzugsweise zwischen 10 mm² und 25 mm² aufweist, wobei der Kanal (6) durch ein Gewinde (14) begrenzt wird, das an der lateralen Wand (8, 11) eines der ersten und zweiten Behälter (2, 3) gebildet wird, wobei das Gewinde (14) eine Gewindespitze aufweist, die mit einer hermetischen Abdichtung gegen die laterale Wand (8, 11) des jeweils anderen der ersten und zweiten Behälter (2, 3) geklemmt ist, wobei das Gewinde (14) aus einem Gewindeprofil mit einem allgemein dreieckigen Querschnitt mit einem abgeflachten Scheitel fern von der Außenfläche (5a) des zweiten Behälters (3) besteht.

2. Verdampfer (1) für eine Kältekreislaufmaschine nach Anspruch 1, **dadurch gekennzeichnet, dass** sich der Kanal (6) wenigstens um einen Teil der lateralen Wand (11) des zweiten Behälters (3) erstreckt, der das Verbindungsende zu dessen Boden (10) umfasst.

3. Verdampfer (1) für eine Kältekreislaufmaschine nach Anspruch 2, **dadurch gekennzeichnet, dass** wenigstens der Teil der lateralen Wand (11) des zweiten Behälters (3) eine gleichförmige Dicke aufweist.

4. Verdampfer (1) für eine Kältekreislaufmaschine nach Anspruch 3, **dadurch gekennzeichnet, dass** wenigstens der Teil der lateralen Wand (11) des zweiten Behälters (3) konisch ist.

5. Verdampfer (1) für eine Kältekreislaufmaschine nach einem der Ansprüche 1 bis 6, **dadurch gekennzeichnet, dass** die laterale Wand (11) des zweiten Behälters (3) einen apikalen Flansch (15) für das Fixieren mit einer hermetischen Dichtung an der apikalen Kante der lateralen Wand (8) des ersten Behälters (2) aufweist.

6. Verdampfer (1) für eine Kältekreislaufmaschine nach einem der Ansprüche 3 bis 5, **dadurch gekennzeichnet, dass** zwischen den Böden (7, 10) der ersten und zweiten Behälter (2, 3) ein Zwischenraum (16) in einer Fluidkommunikation mit dem Kanal (6) ist.

7. Verdampfer (1) für eine Kältekreislaufmaschine nach Anspruch 6, **dadurch gekennzeichnet, dass** der Boden (7) des ersten Behälters (2) ein kalibriertes Durchgangsloch (17) für das Einlassen des Kühlfluids in den Zwischenraum (16) aufweist.

8. Verdampfer (1) für eine Kältekreislaufmaschine nach einem der Ansprüche 1 bis 7, **dadurch gekennzeichnet, dass** die laterale Wand (8) des ersten Behälters (2) an dem Scheitel ein kalibriertes Durchgangsloch (18) für das Auslassen des Kühlfluids aus dem Kanal (6) aufweist.

9. Kältekreislaufmaschine für das Kühlen einer Menge eines flüssigen oder festen Lebensmittelprodukts, die einen Verdampfer (1) gemäß einem der vorstehenden Ansprüche umfasst.

10. Kältekreislaufmaschine nach einem der vorstehenden Ansprüche, **dadurch gekennzeichnet, dass** der zweite Behälter (3) oberflächliche Nuten (21) für das Ausführen der zwischen dem dritten Behälter (13) und dem zweiten Behälter (3) während des Einführens des dritten Behälters (13) in den zweiten Behälter (2) eingeschlossenen Luft aufweist.

11. Kältekreislaufmaschine nach einem der vorstehenden Ansprüche, **dadurch gekennzeichnet, dass** der Verdichter, der Verflüssiger und/oder das Laminationsorgan des Kältekreislaufs auf kalibrierte Weise überdimensioniert sind, damit die Maschine bei einer niedrigen Geschwindigkeit mit einer maximalen Performanzeffizienz betrieben werden kann, wenn die klimatischen Bedingungen außerhalb der Maschine variieren.

12. Verfahren zum Herstellen eines Verdampfers, das die folgenden Schritte umfasst:
- Vorsehen eines ersten Behälters (2), der einen Boden (7), eine laterale Wand (8), eine Zugriffsöffnung (9), ein Durchgangsloch (17) für das Einlassen eines Kühlfluids und ein Durchgangsloch (18) für das Auslassen des Kühlfluids umfasst,
- Vorsehen eines zweiten Behälters (3), der einen Boden (10) mit kleineren Dimensionen als der Boden (7) des ersten Behälters (2), eine laterale Wand (11), eine Zugriffsöffnung (12), einen apikalen Flansch (15), der eine derartige Zugriffsöffnung begrenzt, und eine Außenfläche (5a) der lateralen Wand (11), die ein spiralförmiges Gewinde mit Dimensionen für das Eingreifen um 2-6 Zehntel eines mm mit der Innenfläche (4a) der lateralen Wand (8) des ersten Behälters (2) aufweist,
- Erhitzen des ersten Behälters (2) zu einer Temperatur, die eine ausreichende Expansion für das Einstecken des zweiten Behälters vorsieht,
- Einstecken des zweiten Behälters (3) in den ersten Behälter (2), bis der Flansch (15) des zweiten Behälters (2) gegen die Öffnung (9) des ersten Behälters (2) anstößt,
- Abkühlen des ersten Behälters (2) mit dem darin eingesteckten zweiten Behälter (3), um ein Crimpen oder Schrumpfen des ersten Behälters an dem zweiten Behälter zu erhalten, bei dem das Gewinde (14) des zweiten Behälters gegen die Innenfläche (4a) der lateralen Wand (8) des ersten Behälters gedrückt wird, um eine hermetische Abdichtung zu erzielen und einen spiralförmigen Kanal mit einer Querschnittfläche zwischen 5 mm² und 30 mm² zu bilden, wobei der Kanal (6) durch ein Gewinde (14) begrenzt wird, das an der lateralen Wand (8, 11) eines der ersten und zweiten Behälter (2, 3) gebildet wird, wobei das Gewinde (14) eine Gewindespitze aufweist, die mit einer hermetischen Abdichtung gegen die laterale Wand (8, 11) des jeweils anderen der ersten und zweiten Behälter (2, 3) geklemmt ist, wobei das Gewinde (14) aus einem Gewindeprofil mit einem allgemein dreieckigen Querschnitt mit einem abgeflachten Scheitel fern von der Außenfläche (5a) des zweiten Behälters (3) besteht.

## Revendications

1. Evaporateur (1) pour une machine à cycle de réfrigération destiné à refroidir une dose de produit alimentaire liquide ou solide, **caractérisé en ce qu'**il comprend au moins un premier récipient (2), au moins un deuxième récipient (3) logé de manière fixe dans le premier récipient (2), ledit deuxième récipient (3) étant configuré pour loger à l'intérieur de celui-ci au moins un troisième récipient (13) amovible et destiné à contenir la dose de produit, le premier récipient (2) et le deuxième récipient (3) ayant des surfaces opposées (4a, 5a) configurées et agencées pour former en coopération l'une avec l'autre un canal (6) pour la circulation du fluide de refroidissement utilisé dans le cycle de réfrigération, le premier récipient (2) ayant un fond (7) et une paroi latérale (8) qui délimite avec son extrémité opposée au fond (7) une bouche d'accès (9), le deuxième récipient (3) ayant un fond (10) et une paroi latérale (11) qui délimite avec son extrémité opposée au fond (10) une bouche d'accès (12), le deuxième récipient (3) étant positionné avec son fond (10) faisant face au fond (7) du premier récipient (2) et avec sa paroi latérale (11) faisant face à la paroi latérale (8) du premier récipient (2), ledit canal (6) s'étendant le long d'un chemin hélicoïdal autour de ladite paroi latérale (8) du deuxième récipient (3), **caractérisé en ce que** ledit canal (6) a une section transversale d'une surface comprise entre 5 mm² et 30 mm², de préférence entre 10 mm² et 25 mm², ledit canal (6) est délimité par un filetage (14) formé sur la paroi latérale (8, 11) de l'un desdits premier et deuxième récipients (2, 3), les filets dudit filetage (14) ayant une crête serrée avec un joint hermétique contre la paroi latérale (8, 11) de l'autre des premier et deuxième récipients (2, 3), ledit filetage (14) consistant en des filets ayant généralement une section triangulaire avec un sommet aplati loin de la surface extérieure (5a) du deuxième récipient (3).

2. Evaporateur (1) pour une machine à cycle de réfrigération selon la revendication précédente, **caractérisé en ce que** ledit canal (6) s'étend au moins autour d'une partie de la paroi latérale (11) du deuxième récipient (3) comprenant l'extrémité de jonction pour son fond (10).

3. Evaporateur (1) pour une machine à cycle de réfrigération selon la revendication précédente, **caractérisé en ce qu'**au moins ladite partie de la paroi latérale (11) du deuxième récipient (3) a une épaisseur uniforme.

4. Evaporateur (1) pour une machine à cycle de réfrigération selon la revendication précédente, **caractérisé en ce qu'**au moins ladite partie de la paroi latérale (11) du deuxième récipient (3) est conique.

5. Evaporateur (1) pour une machine à cycle de réfrigération selon l'une quelconque des revendications 1 à 6, **caractérisé en ce que** la paroi latérale (11) dudit deuxième récipient (3) présente une bride apicale (15) pour un scellement hermétique au bord apical de la paroi latérale (8) du premier récipient (2) .

6. Evaporateur (1) pour une machine à cycle de réfrigération selon l'une quelconque des revendications 3 à 5, **caractérisé en ce qu'**entre le fond (7, 10) desdits premier et deuxième récipients (2, 3) est ménagé un espace (16) en communication fluidique avec ledit canal (6).

7. Evaporateur (1) pour une machine à cycle de réfrigération selon la revendication précédente, **caractérisé en ce que** le fond (7) dudit premier récipient (2) présente un trou (17) traversant calibré pour l'entrée du fluide de réfrigération dans ledit espace (16).

8. Evaporateur (1) pour une machine à cycle de réfrigération selon l'une quelconque des revendications 1 à 7, **caractérisé en ce que** la paroi latérale (8) dudit premier récipient (2) présente au sommet un trou (18) traversant calibré pour la sortie du fluide de réfrigération dudit canal (6).

9. Machine à cycle de réfrigération pour refroidir une dose de produit alimentaire liquide ou solide, comprenant un évaporateur (1) selon l'une quelconque des revendications précédentes.

10. Machine à cycle de réfrigération selon la revendication précédente, **caractérisé en ce que** ledit deuxième récipient (3) comporte des rainures superficielles (21) pour évacuer l'air emprisonné entre le troisième récipient (13) et le deuxième récipient (3) lors de l'introduction dudit troisième récipient (13) dans le deuxième récipient (3).

11. Machine à cycle de réfrigération selon la revendication précédente, **caractérisé en ce qu'**au moins un élément du cycle de réfrigération choisi parmi le compresseur, le condenseur et l'organe de laminage est surdimensionné de manière calibrée de sorte à permettre à la machine de travailler à basse vitesse avec une efficacité maximale en fonction des variations des conditions climatiques extérieures à la machine.

12. Procédé de fabrication d'un évaporateur comprenant les étapes consistant à :
- fournir un premier récipient (2) comprenant un fond (7), une paroi latérale (8), une bouche d'accès (9), un trou traversant (17) pour l'entrée d'un fluide de réfrigération, un trou traversant (18) pour la sortie dudit fluide de réfrigération ;
- prévoir un deuxième récipient (3) comprenant un fond (10) de plus petites dimensions par rapport au fond (7) du premier récipient (2), une paroi latérale (11), une bouche d'accès (12), une bride apicale (15) délimitant cette bouche d'accès et une surface extérieure (5a) de la paroi latérale (11) ayant un filetage hélicoïdal avec des dimensions de sorte à interférer par 2 à 6 dixièmes de mm avec la surface intérieure (4a) de la paroi latérale (8) du premier récipient (2) ;
- chauffer ledit premier récipient (2) à une température permettant une expansion suffisante pour permettre l'insertion du deuxième récipient ;
- insérer le deuxième récipient (3) dans le premier récipient (2) jusqu'à ce que la bride (15) du deuxième récipient (2) vienne buter contre la bouche (9) du premier récipient (2) ;
- refroidir le premier récipient (2) avec le deuxième récipient (3) inséré dans celui-ci de manière à obtenir le sertissage ou le rétrécissement du premier récipient sur le deuxième récipient avec le pressage du filetage (14) dudit deuxième récipient contre la surface intérieure (4a) de la paroi latérale (8) dudit premier récipient, y réalisant un scellement hermétique et formant un canal hélicoïdal ayant une section transversale de surface comprise entre 5 mm² et 30 mm², ledit canal (6) étant délimité par un filetage (14) formé sur la paroi latérale (8, 11) de l'un desdits premier et deuxième récipients (2, 3), les filets dudit filetage (14) ayant une crête serrée avec un joint hermétique contre la paroi latérale (8, 11) de l'autre des premier et deuxième récipients (2, 3), ledit filetage (14) consistant en des filets ayant généralement une section triangulaire avec un sommet aplati loin de la surface extérieure (5a) du deuxième récipient (3).
